(19) Europäisches Patentamt

European Patent Office

Office européen des brevets

(11) EP 1 170 738 A2

(12) EUROPEAN PATENT APPLICATION

(43) Date of publication:
09.01.2002 Bulletin 2002/02

(51) Int Cl.⁷: G11B 7/13

(21) Application number: 01115673.4

(22) Date of filing: 04.07.2001

(84) Designated Contracting States:
AT BE CH CY DE DK ES FI FR GB GR IE IT LI LU MC NL PT SE TR
Designated Extension States:
AL LT LV MK RO SI

(30) Priority: 07.07.2000 JP 2000207558

(71) Applicant: Pioneer Corporation
Meguro-ku, Tokyo (JP)

(72) Inventors:
• Ogasawara, Masakazu,
c/o Corporate R&D Laboratory
Tsurugashima-shi, Saitama 350-2288 (JP)
• Koyanagi, Hajime,
c/o Corporate R&D Laboratory
Tsurugashima-shi, Saitama 350-2288 (JP)

(74) Representative:
Klingseisen, Franz, Dipl.-Ing. et al
Patentanwälte, Dr. F. Zumstein, Dipl.-Ing. F.
Klingseisen, Postfach 10 15 61
80089 München (DE)

(54) **Pickup device**

(57) Disclosure is a pickup device of an apparatus for recording or reproducing information, by irradiation of a light beam, to and from a multi-layered recording medium having a plurality of recording layers laminated through spacer layers and formed on the recording layer a pre-pit region having a reflectivity different from a reflectivity of the surrounding. The device includes an illumination optical system having an objective lens for focusing a light beam onto any of the recording layers of the multi-layered recording medium, and a detecting optical system including a photodetector for receiving and photoelectrically converting reflection light from the recording layer of the multi-layered recording medium through the objective lens. The photodetector has a normalized detector size of a size of 10 $\mu m^2$ to 50 $\mu m^2$.

FIG. 8

RELATIONSHIP BETWEEN
DETECTOR SIZE AND SPOT SIZE

**Description**

<u>BACKGROUND OF THE INVENTION</u>

1. Field of the invention

The present invention relates to a pickup device for recording or reproducing information to or from an optical information recording medium, such as an optical disc, recorded with information on the track. More particularly, the invention relates to a pickup device for recording or reproducing information to or from a multi-layered optical disc having a plurality of recording layers laminated through spacer layers.

2. Description of the related art

In recent years, optical discs are widely used as means for recording and reproducing data such as video data, audio data and computer data. The high-density recording discs called DVDs (Digital Versatile Discs) have been placed in practical application. The DVDs include various recording types and reading types, one of which is a multi-layered optical disc type in a lamination structure having a plurality of information recording layers.

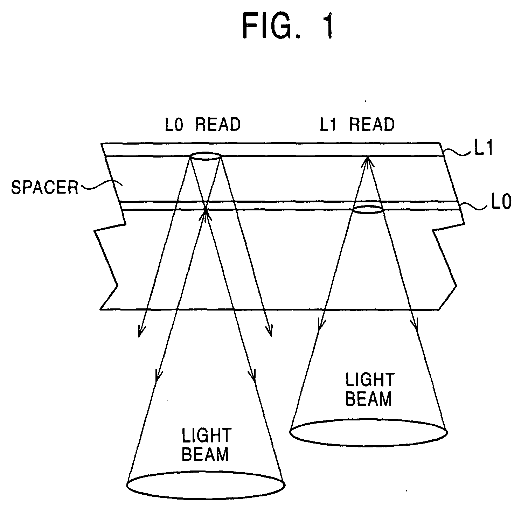

In a two-layered disc as an example of the DVDs, a first recording layer is called a layer 0 (hereinafter referred as "L0") and a second recording layer a layer 1 (hereinafter referred as "L1") as viewed from the side of reading, as shown in Fig. 1.

The reflection layer of L0 is formed of gold or dielectric as a semi-transparent film to allow reading of signals from L1 through L0. The reflection layer of L1 is formed of aluminum, which is similarly used in the DVD single-layered disc.

Between L0 and L1, a light-transmissive spacer layer is provided to separate between the recording layers at a constant thickness. The spacer layer, serving as a light path of reading light, has a high transmissivity at wavelength of reading light. This uses a UV-ray setting resin material having a refractive index near the refractive index of the substrate.

It is possible to read signals out of any of L0 and L1 at disc one side by merely moving a focus of a reading beam from L0 to L1 and vice versa (hereinafter referred as "focus jump").

The two-layered disc requires to clearly separate between the L0 and L1 signals and reading the signal out of each layer without deterioration. For this reason, the spacer thickness (interlayer thickness) and the substrate thickness are properly set.

In the case of great spacer thickness, if focus is aligned for example to L0, the beam illuminated to L1 broadly spreads. Accordingly, the reflection light from L1 is given a signal in a direct-current form without undergoing modulation by the pits. Consequently, if the read-out signal is removed of a high range component by a high-pass filter, then a signal of L0 only can be read out. Likewise, if focused to L1, a signal of L1 only can be read out. However, where the spacer thickness is small, the beam illuminated to L1 is not greatly spread even by focusing to L0. Accordingly, the signal of L1 leaks in a certain degree (this leak is referred to as interlayer crosstalk). In order to make small interlayer crosstalk, it is satisfactory to increase the spacer thickness. However, the increase of thickness causes increase of spherical aberration.

There is a demand for further noise reduction in the pickup device to be used in an apparatus for recording or reproducing data from or to the optical information recording medium, such as DVD for recording the data as above over the track, while moving it relatively.

<u>OBJECT AND SUMMARY OF THE INVENTION</u>

The present invention has been made in view of such a situation, and it is an object to provide a pickup device that makes it possible to stably write and read data to and from multi-layered recording layers while suppressing noise.

A pickup device of the invention is a pickup device of an apparatus for recording or reproducing information, by irradiation of a light beam, to and from a multi-layered recording medium having a plurality of recording layers laminated through spacer layers and formed on the recording layer a pre-pit region having a reflectivity different from a reflectivity of the surrounding, the device comprising: an illumination optical system including an objective lens for focusing a light beam onto any of the recording layers of the multi-layered recording medium; and a detecting optical system including a photodetector for receiving and photoelectrically converting reflection light from the recording layer of the multi-layered recording medium through the objective lens; wherein the photodetector has a normalized detector size of a size of 10 $\mu m^2$ to 50 $\mu m^2$.

In one aspect of the pickup device according to the invention, said multi-layered recording medium is in a disc form, said pre-pit region being arranged in a spoke form extending from a disc center.

In another aspect of the pickup device according to the invention, said multi-layered recording medium is in a disc form, said pre-pit region being arranged periodically along a disc circumferential direction.

In a further aspect of the pickup device according to the invention, said objective lens has a numerical aperture of 0.85 or greater.

In a still further aspect of the pickup device according to the invention, said spacer layer has a thickness of 10 $\mu m$ to 30 $\mu m$.

BRIEF DESCRIPTION OF THE DRAWINGS

Fig. 1 is a schematic sectional view of a DVD two-layered disc;

Fig. 2 is a fragmentary magnifying plan view of one recording layer of a DVR according to the present invention;

Fig. 3 is a plan view of a DVR single-layered disc according to the invention;

Fig. 4 is a plan view of a DVR two-layered disc according to the invention;

Fig. 5 is a schematic view of a pickup device according to the invention;

Figs. 6A, 6B and 6C are plan views each showing light-receiving surfaces of a photodetector of the pickup device according to the invention and a shape change of a light spot thereon;

Fig. 7 is a schematic circuit diagram of a signal generating part in the optical pickup device according to the invention;

Fig. 8 is a plan view of light-receiving surfaces of a photodetector showing a normalized detector size;

Fig. 9 is a graph showing a change of an interlayer crosstalk Ct for the normalized detector size;

Fig. 10 is a graph showing a change of capture range Cr for the normalized detector size;

Fig. 11 is a graph showing a change of a intensity ratio of reflection light from recording layers L0 and L1 against a spot position in the DVR two-layered disc according to the invention; and

Fig. 12 is a graph showing a change of a recording-layer-L1 reproduced signal undergone an interlayer crosstalk from the recording layer L0 against a spot position in the DVR two-layered disc according to the invention.

DETAILED DESCRIPTION OF THE PREFERRED EMBODIMENT

Now, an embodiment of the present invention will be explained on the basis of the drawings.

First explained is a multi-layered recording medium of a rewritable type to be recorded and reproduced by the use of an optical pickup based on the present invention, etc (in this paper, such medium is referred merely to as DVR).

The DVR has a plurality of recording layers having a laminated structure of a medium layer formed of a phase-change material, e.g. Ag-In-Sb-Te, and vitrified protection layers, e.g. of $ZnS$-$SiO_2$, sandwiching that layer.

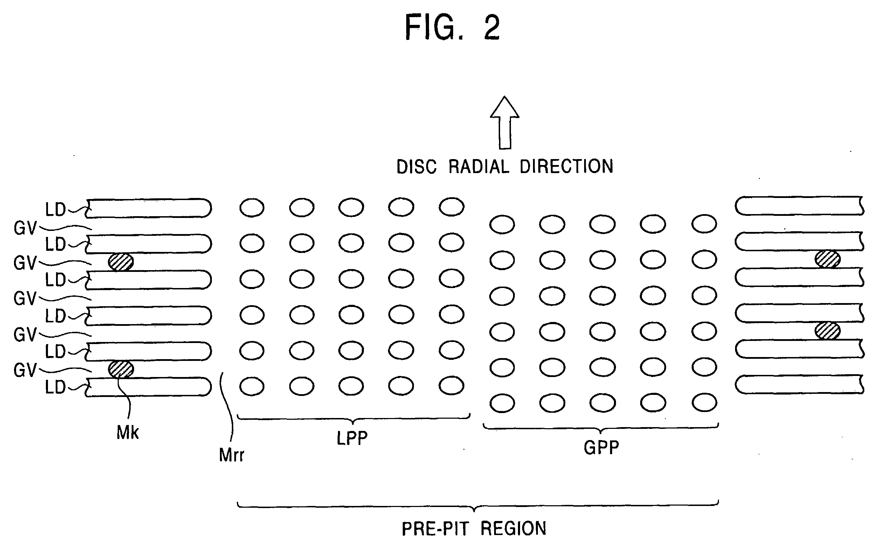

As shown in Fig. 2, convex groove tracks GV and concave land tracks LD are previously formed alternately in a spiral or coaxial form on one recording layer of the DVR. Incidentally, each groove track GV although shown linear in Fig. 2 may be wobbled with a frequency corresponding to a rotation velocity for the DVR. Information is to be recorded on at least one of the groove track GV and the land track LD.

Furthermore, in the Land track LD and groove track GV of the DVR recording layer, land pre-pits LPP and groove pre-pits GPP carrying information concerning address, recording timing or the like are previously formed as a pre-pit region together with a mirror-surface region Mrr. The pre-pit regions each forming pre-pits may be periodically arranged nearly evenly, e.g. extending in a spoke form from the center in a CAV (constant angular velocity) scheme or circumferentially of the disc in a CLV (constant linear velocity) scheme or a combination scheme, over the entire surface of the DVR.

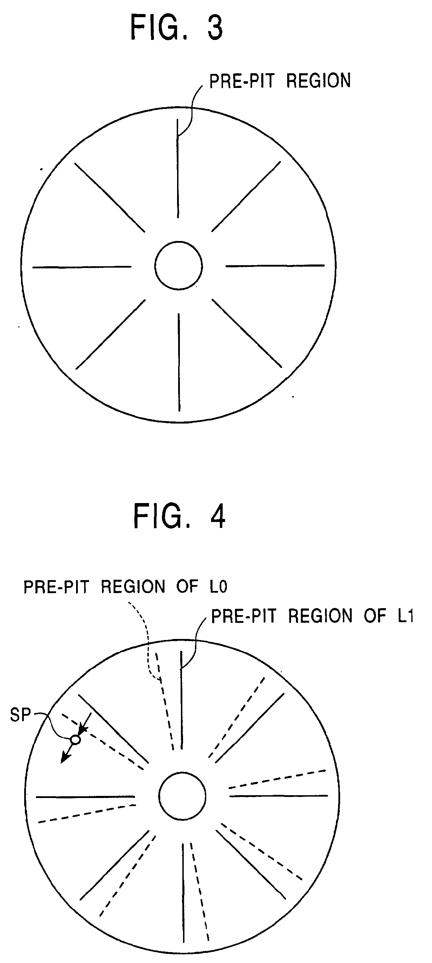

As shown in Fig. 3, for example a DVR two-layered disc has pre-pit regions, in the DVR single-layered disc, formed in a spoke form radially extending from the center at an equal angular interval. Meanwhile, as shown in Fig. 4, a DVR two-layered disc has pre-pit regions formed in spoke forms with deviation in between a layer L0 and a layer L1 in order not for overlapping with. Furthermore, it is possible to provide two or more recording layers in the DVR.

Data recording to and reproducing from the DVR is carried out by collecting and illuminating a recording-light beam modulated in accordance with data onto a track, while recognizing a position on the track to be recorded due to detection of a land pre-pit LPP and groove pre-pit GPP of the pre-pit region. On this occasion, for example, the part illuminated by the recording-light beam is heated up and then rapidly or gradually cooled down, to form a recording mark part Mk having a reflectivity different from that of the surrounding in a groove track GV shown in Fig. 2.

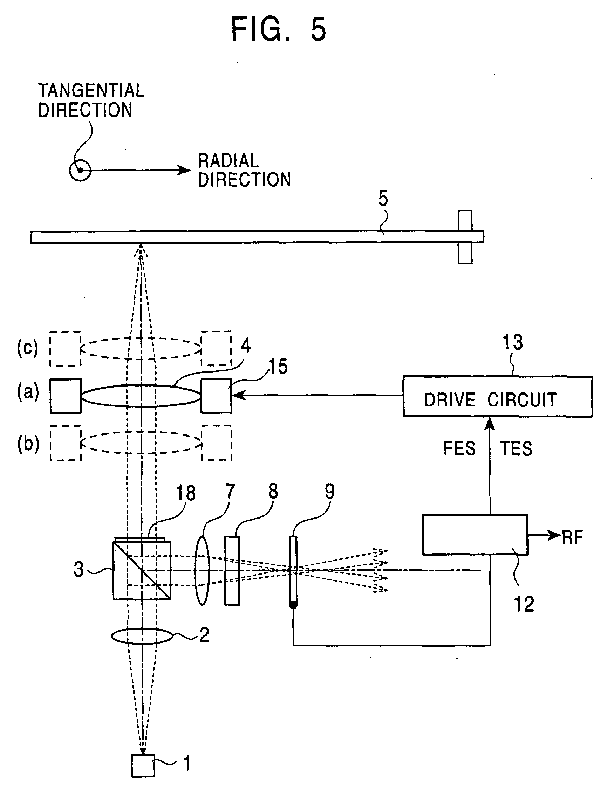

Fig. 5 shows a pickup device of the invention using, for example, an astigmatic method. In Fig. 5, the light beam emitted from a semiconductor laser 1 is made into parallel light in a collimator lens 2. This beam is passed through a polarization beam splitter 3 and 1/4-wavelength plate 18, and then focused by an objective lens 4 onto a DVR two-layered optical disc 5 placed around a focal point thereof. This forms a light spot on a pit row on an information recording surface of the optical disc 5.

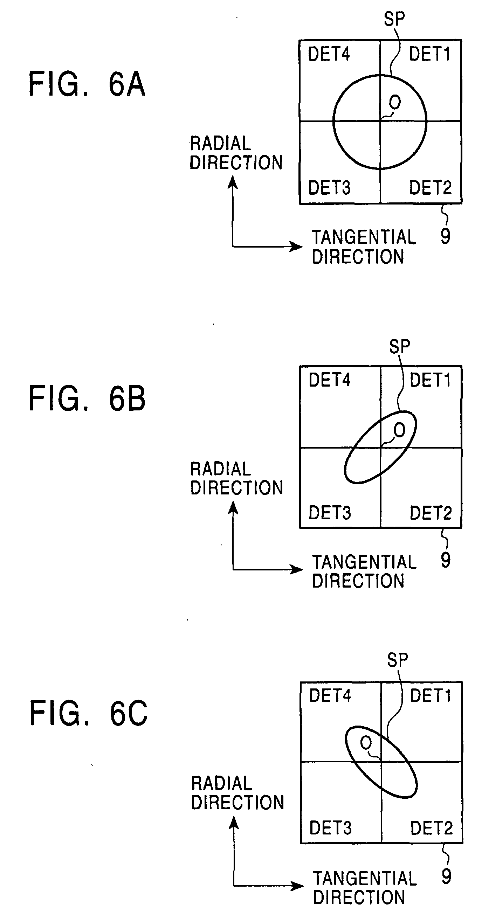

The reflection light from the optical disc 5 is focused by the objective lens 4 and directed by the polarization light beam splitter 3 toward a detecting focusing lens 7. The focused light focused by the detecting lens 7 is passed through an astigmatism generating element 8, such as cylindrical lens and multi-lens, and then forms a light spot at around a center of a light-receiving surface of a four-split photodetector 9 having four light-receiving surfaces four-divided in a direction along the DVR groove track GV and a direction perpendicular to the groove track. The multi-lens 8 illuminates a true-circle light spot SP to the four-split photodetector 9 as shown in Fig. 6A when the light beam collected on the recording surface of the optical disc 5 is focused. It also illuminates a light spot SP elliptic in a diagonal direction of the element to the four-split photodetector 9, i.e. causing so-called astigmatism as shown in Fig. 6B or 6C when out of focus (when a distance from the optical disc 5 to the objective lens 4 is far (Fig. 6B) or near (Fig. 6C).

The four-split photodetector 9 performs photoelectric conversion on portions of the light spot illuminated to the four light-receiving surfaces respectively into electric signals and supplies the signals to a connected detecting circuit 12. The detecting circuit 12 includes a predetermined circuit to generate an RF signal (RF), a focus error signal (FES), tracking error signal (TES) and the like on the basis of the electric signals supplied from the four-split photodetector 9. An actuator drive circuit 13 supplies each drive signal to an objective lens drive mechanism 15 on the basis of an error signal. The objective lens drive mechanism 15 causes the objective lens 4 to move to a focus position and a tracking position depending on the drive signal.

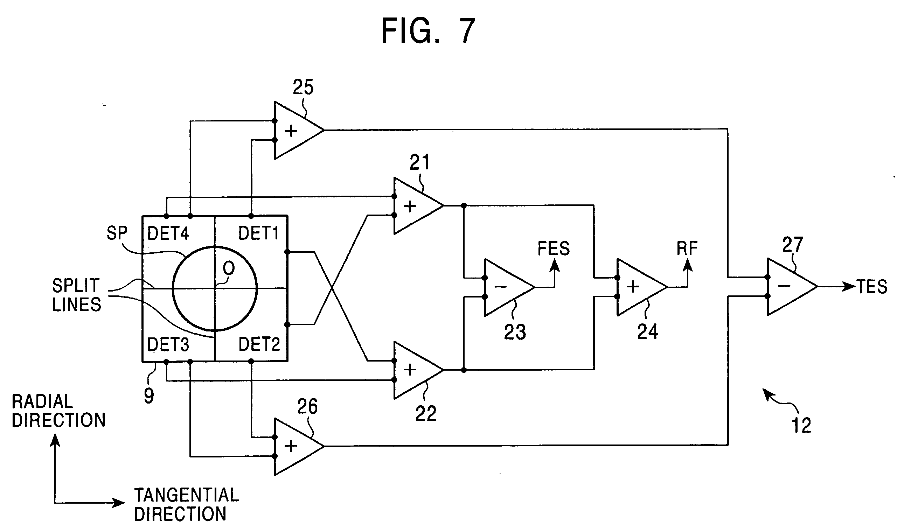

As shown in Fig. 7, the four-split photodetector 9 is structured with four individual elements of DET1 to DET4, as first to fourth quadrants, arranged proximately with respect to two perpendicular divisional lines as a boundary. The four-split photodetector 9 is arranged such that one divisional line is in parallel with an extending direction of the recording track of the optical disc 5, i.e. mapping in a tangential direction while the other divisional line is in parallel with mapping in a radial direction. An adder 22 adds together the photoelectric-converted outputs from the elements DET1 and DET3 symmetric with respect to a light-receiving surface center O of the four-split photodetector 9. An adder 21 adds together the photoelectric-converted outputs from the elements DET2 and DET4. The outputs of these adders 21, 22 are supplied to a subtracter 23. The subtracter 23 calculates a difference between the supplied signals and outputs a subtraction signal as a focus error signal (FES).

In generating a focus error component, during focusing the light-spot intensity distribution is in symmetry in tangential and radial directions with respect to the light-receiving surface center O of the four-split photodetector 9 (a true-circle light spot as in Fig. 6A is formed on the four-split photodetector 9). Consequently, the two added values of the outputs photoelectrically converted of the elements on the diagonal lines are equal to each other, giving a focus error component "0". Meanwhile, during out of focus, a light spot in elliptic form in a diagonal direction of the elements is formed on the four-split photodetector 9, as shown in Fig. 6B or Fig. 6C. Consequently, the two added values of the photoelectrically converted outputs of the elements on the diagonal lines are different from each other. Accordingly, the focus error signal component outputted from the subtractor 23 has a value dependent upon a focus error.

That is, if representing the sign of the element of the four-split photodetector 9 as its output, the focus error signal FES is expressed as FES = (DET1 + DET3) - (DET2 + DET4).

Likewise, the FR signal RF is expressed RF = (DET1 + DET3 + DET2 + DET4) because, by supplying the outputs of the adders 21, 22 to the adder 24, the adder 24 outputs a sum signal thereof as an RF signal (RF), as shown in Fig. 7.

Concerning tracking servo, as shown in Fig. 7 the outputs of the element pairs DET1, DET4 and DET2, DET3 of the four-split photodetector 9 at the both sides with respect to the track tangential direction are, respectively, supplied to the adders 25 and 26. These adders 25, 26 have respective outputs to be supplied to the subtracter 27. The subtracter 27 can calculate a difference between the supplied signals to make its radial push-pull signal as a tracking error signal (TES). Although this embodiment carries out tracking control by the push-pull method, tracking control can be carried out by a differential push-pull scheme. Incidentally, the shape of the photodetector light-receiving part may be, besides rectangular as shown in Fig. 6, another polygonal or circular or in a juxtaposed form using a spot-size method. Furthermore, although the above embodiment showed the pickup device using infinite optical system using collimator lens, the invention can adopt a pickup device using a finite optical system not using a collimator lens.

Next, explanation is made on the size of the light-receiving part of the photodetector 9 used for the two layers of this embodiment.

In the two-layered disc of DVR shown in Fig. 4 forming pre-pit regions in spoke forms deviated not to overlap at the recording layers L0 and L1, the increase of density and decrease of spherical aberration is achieved by setting the numerical aperture high, e.g., NA = 0.85 or greater, and setting a thickness of ranging from 10 $\mu$m to 30 $\mu$m for the interlayer distance or spacer layer thickness. For this reason, interlayer crosstalk must be suppressed while maintaining the responsibility required in the pickup device.

Accordingly, the present inventor puts the eye on focus-servo capture range and interlayer crosstalk, to define a normalized detector size of a suitable photodetector (light-receiving surface) in the pickup device.

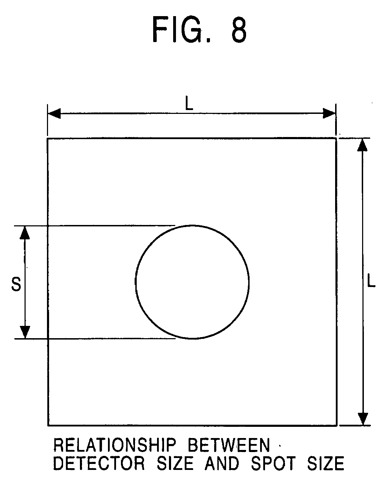

The normalized detector size in the DVD book (DVD standardization book) defines the size of the light-receiving part of the photodetector 9. The normalized detector size on a given disc surface is given by a division ($B/\beta^2$) of an actual photodetector (light-receiving surface) area $B = L^2$ by a square of detecting optical system magnification $\beta = f_c/f_{oB}$ (where $f_c$ denotes a focal distance of the detecting optical system and $f_{oB}$ a focal distance of the objective lens) provided that S is a 'spot size and L is a size of one side of the detector (light-receiving surface), as shown in Fig. 8. The normalized detector size on the disc surface defined in the DVD book is in a range of 100 $\mu$m$^2$ < $B/\beta^2$ < 144 $\mu$m$^2$. Accordingly, the actual detector dimension is given as a multiplication of a normalized detector size dimension by a square of the detecting optical system magnification.

With a paraxial computation providing a relation coefficient x of between a normalized detector size and an on-detector spot size as x = S/L, a focus-servo capture range Cr and interlayer crosstalk Ct can be computed by the following Formula 1 and Formula 2. Although depending on pickup design, x is set at around 0.5.

$$Cr = S/(2\ \beta\ NAo) \tag{1}$$

$$S = xL = x\ \sqrt{B}$$

Cr: focus-servo capture range [μm]
S: spot size [μm]
β: detecting optical system magnification
L: one-side size of the detector [μm]
x: relation coefficient between the spot size and the detector
B: actual detector size [μm$^2$]
NAo: objective-lens numerical aperture

$$Ct = \frac{4}{x^2 \pi} \frac{1}{\left(\frac{2d}{nCr}\right)^2 -1} \tag{2}$$

Ct: interlayer crosstalk [%]
d: interlayer thickness [μm]
n: disc refractive index

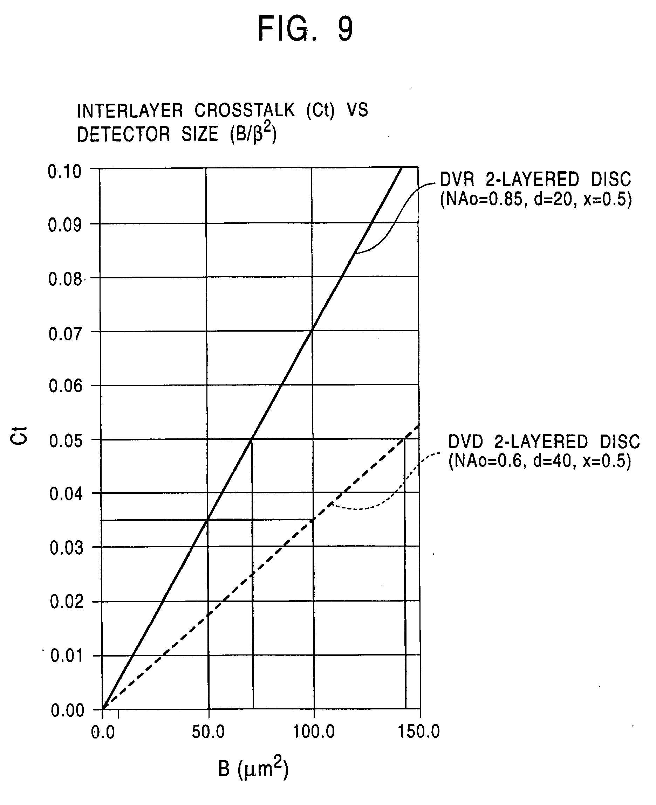

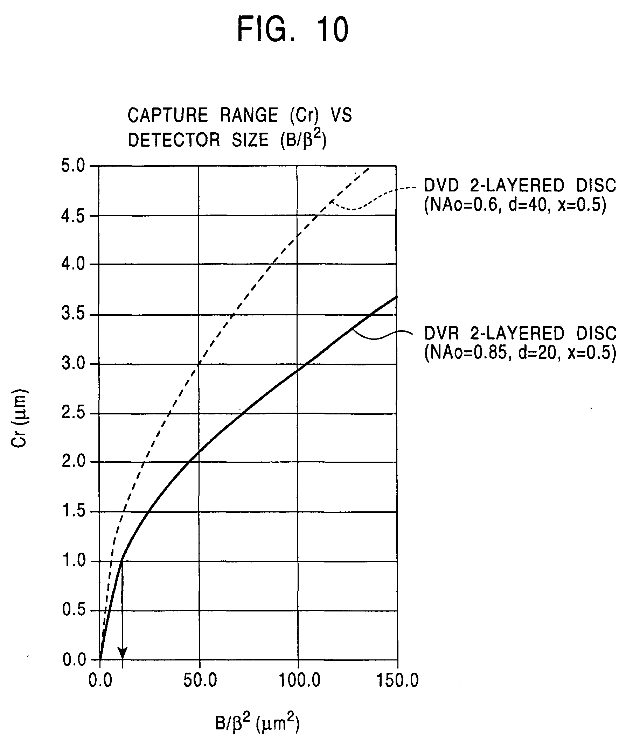

In the case of two-layered disc (x = 0.5, NA = 0.6, interlayer thickness 40 μm) in a current DVD defined in the DVD book, when computing an interlayer crosstalk Ct, the changes of a capture range Cr and an interlayer crosstalk Ct against a normalized detector size B/β$^2$ are respectively given in graphs (broken line) shown in Fig. 9 and Fig. 10. As apparent from Fig. 9, in the current DVD two-layered disc, they are in a range of 3.5 to 5% of the interlayer crosstalk Ct in a normalized detector size of 100 μm$^2$ < B/β$^2$ < 144 μm$^2$. If actually realizing this value, the capture range Cr will be nearly 3.7 μm to 5 μm as apparent from Fig. 10 (broken line).

Because the current DVD two-layered discs are not rewritable type but ROMs only, the interlayer crosstalk Ct has almost non-modulation DC component. It is considered that the use of ATC (Auto Threshold Control) has no effect upon reproducing.

Accordingly, if computation is made for the DVR two-layered disc (x = 0.5, NA = 0.285, interlayer thickness 20 μm) shown in Fig. 4, the changes in capture range Cr and interlayer crosstalk Ct against the normalized detector size B/β$^2$ are respectively given as graphs (solid lines) shown in Fig. 9 and Fig. 10. In the DVR two-layered disc, the detector size B/β$^2$ realizing an interlayer crosstalk Ct nearly equivalent to the current DVD is a value of ranging from 50 μm$^2$ to 72 μm$^2$, as apparent from Fig. 9.

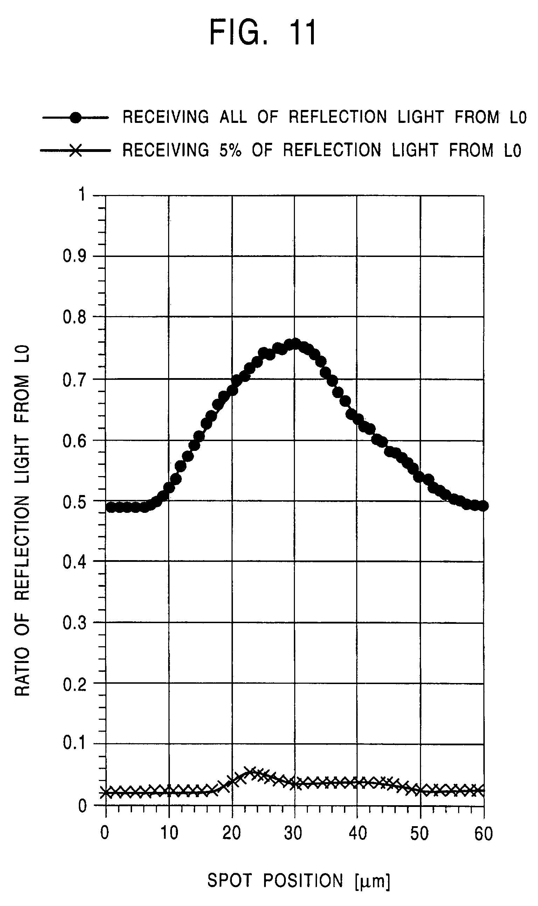

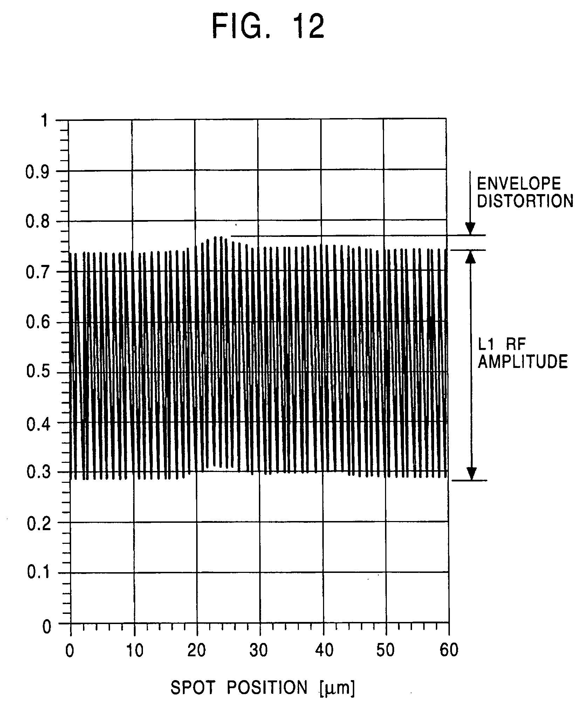

A DVR two-layered disc, shown in Fig. 4, was made having recording layers L0 and L1 on the assumption of giving an interlayer crosstalk amount of 5%. Measurements and evaluations were made on the reflection light intensity from L0 and L1 and the L1 reproduced signal undergone by an interlayer crosstalk from L0. Results are respectively shown in Fig. 11 and Fig. 12. In the figures, a spot position on the horizontal axis represents a position of from a time point of passing a pre-pit region on L0 overlapped with the light spot shown in Fig. 4 by deviation.

Provided that RF modulation degree on L1 is 45% and interlayer crosstalk amount is 5%, the ration of envelope distorted by the interlayer crosstalk from L0 amounts to 5.7% against RF amplitude, as shown in Fig. 12. The frequency is 280 kHz or higher greatly beyond the ATC zone. It is to be considered as understood from Fig. 11 that the distortion from L0 is due to, as one factor, a difference between the average reflectivity on the pre-pit region of the DVR recording layer and the average reflectivity on the surrounding land track LD and groove track GV.

The crosstalk amount 5% corresponds to a crosstalk amount generated at the greatest value 144 μm$^2$ of the normalized detector size in the DVD book. In the DVR case, however, it is expected that a problem occur in reproducing the two-layered disc unless given smaller than this interlayer crosstalk value.

The DVR two-layered disc, mainly for recording, is in a spoke structure written with address information, etc. Consequently, there is a need to further reduce the interlayer crosstalk because of undergoing modulation in the spoke-structure pre-pit region. The affection due to the deviation in pre-address areas (spokes) between the recording layers appears in that the signal of a reproducing layer is distorted by a modulation signal of the pre-address area on a non-reproducible layer. The magnitude of the distortion against the RF signal, if great, possibly result in large deterioration of error rate. According to the experiment result, when the distortion amount is 2% - 3% or greater, the deterioration of error rate is increased.

From these results, 50 μm$^2$ was given as a normalized detector size on a disc surface (nearly 3% as a reproduced signal distortion). The lower limit of the detector size was given a value that the capture range is not extremely small, e.g. 10 μm$^2$ (capture range 1 μm$^2$).

In this manner, the present embodiment detects only the return light incident in a predetermined range (0.85 or greater of NA). Accordingly, the provision of the photodetector having light-receiving part with a sufficiently small area makes possible data reading without affection of the layer-L0 pre-address region even in reading data from the layer L1 of a DVR two-layered disc. Also, if the spacer layer thickness as an interlayer thickness is reduced to e.g., a value of 10 μm to 30 μm, spherical aberration is to be suppressed from increasing.

As discussed above, according to the present invention, because the photodetector has a normalized detector size of 10 $\mu m^2$ to 50 $\mu m^2$, noise reduction is achieved in the pickup device.

It is understood that the foregoing description and accompanying drawings set forth the preferred embodiments of the invention at the present time. Various modifications, additions and alternative designs will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

## Claims

1. A pickup device of an apparatus for recording or reproducing information, by irradiation of a light beam, to and from a multi-layered recording medium having a plurality of recording layers laminated through spacer layers and formed on the recording layer a pre-pit region having a reflectivity different from a reflectivity of the surrounding, the device comprising:

   an illumination optical system including an objective lens for focusing a light beam onto any of said recording layers of said multi-layered recording medium; and
   a detecting optical system including a photodetector for receiving and photoelectrically converting reflection light from said recording layer of said multi-layered recording medium through said objective lens; wherein said photodetector has a normalized detector size of a size of 10 $\mu m^2$ to 50 $\mu m^2$.

2. A device according to claim 1, wherein said multi-layered recording medium is in a disc form, said pre-pit region being arranged in a spoke form extending from a disc center.

3. A device according to claim 1, wherein said multi-layered recording medium is in a disc form, said pre-pit region being arranged periodically along a disc circumferential direction.

4. A device according to claim 1, wherein said objective lens has a numerical aperture of 0.85 or greater.

5. A device according to claim 1, wherein said spacer layer has a thickness of 10 $\mu m$ to 30 $\mu m$.

# FIG. 1

# FIG. 2

DISC RADIAL DIRECTION

LD
GV
LD
GV
LD
GV
LD
GV
LD
GV
LD
GV
LD

Mk

Mrr

LPP

GPP

PRE-PIT REGION

EP 1 170 738 A2

# FIG. 3

PRE-PIT REGION

# FIG. 4

PRE-PIT REGION OF L0

PRE-PIT REGION OF L1

SP

# FIG. 5

TANGENTIAL
DIRECTION

RADIAL
DIRECTION

5

(c)
4

(a)
15

DRIVE CIRCUIT
13

(b)

FES     TES

18  7  8  9

3

RF

2

12

1

FIG. 6A

SP

DET4 | DET1

O

RADIAL
DIRECTION

DET3 | DET2

9

TANGENTIAL
DIRECTION

FIG. 6B

SP

DET4 | DET1

O

RADIAL
DIRECTION

DET3 | DET2

9

TANGENTIAL
DIRECTION

FIG. 6C

SP

DET4 | DET1

O

RADIAL
DIRECTION

DET3 | DET2

9

TANGENTIAL
DIRECTION

# FIG. 7

EP 1 170 738 A2

# FIG. 8

RELATIONSHIP BETWEEN
DETECTOR SIZE AND SPOT SIZE

# FIG. 9

INTERLAYER CROSSTALK (Ct) VS
DETECTOR SIZE (B/$\beta^2$)

DVR 2-LAYERED DISC
(NAo=0.85, d=20, x=0.5)

DVD 2-LAYERED DISC
(NAo=0.6, d=40, x=0.5)

B ($\mu$m$^2$)

# FIG. 10

CAPTURE RANGE (Cr) VS
DETECTOR SIZE (B/$\beta^2$)

DVD 2-LAYERED DISC
(NAo=0.6, d=40, x=0.5)

DVR 2-LAYERED DISC
(NAo=0.85, d=20, x=0.5)

Cr ($\mu$m)

B/$\beta^2$ ($\mu$m$^2$)

# FIG. 11

# FIG. 12